# EUROPEAN PATENT SPECIFICATION

(11) **EP 3 255 416 B1**
(45) Date of publication and mention of the grant of the patent: **29.08.2018**
(21) Application number: 17180902.3
(22) Date of filing: 21.12.2012
(51) Int. Cl.: G01N 21/95, G02C 7/02, G02C 13/00, B29C 59/16, G06K 7/10, G06K 19/06, G01N 21/958, C03C 23/00

(54) **METHOD FOR STORING INFORMATION ON A SPECTACLES LENS, SPECTACLES LENS BLANK OR SPECTACLES LENS SEMI-FINISHED PRODUCT**
SPEICHERUNG VON INFORMATIONEN IN BRILLENGLAS, BRILLENGLASROHLING ODER HALBFABRIKAT
STOCKAGE D'INFORMATIONS POUR L'IDENTIFICATION DANS UN VERRE DE LUNETTES, UNE ÉBAUCHE DE VERRE DE LUNETTES OU DANS UN PRODUIT SEMI-FINI

(30) Priority: 22.12.2011 DE 102011089704; 10.01.2012 US 201261585149 P
(43) Date of publication of application: 13.12.2017
(62) Divisional of application: 12818506.3
(73) Proprietor: Carl Zeiss Vision International GmbH, 73430 Aalen (DE)
(72) Inventor: DANGELMAIER, Andreas, 73434 Aalen (DE); HOLTMANN, Simon, Seaford Rise, 5169 (AU); SCHÖN, Roland, 73433 Aalen (DE); HORNAUER, Matthias, 73466 Lauchheim-Hülen (DE)
(74) Representative: Gauss, Nikolai

(56) References cited:
- EP-A1- 2 239 552
- WO-A2-03/049952
- US-A- 5 867 259
- US-A1- 2006 044 509

## Description

The invention relates to a device by means of which the information stored on a spectacle lens in the form of a data matrix code can be read as defined in the claims. WO 03/49952 A2 discloses providing a permanent marking on a spectacle lens which contains information in the form of data. It is suggested that the content of this information is such that the information allows unambiguous identification of the spectacle lens.

EP 2 239 552 A1 describes a lens image sensing apparatus which includes an image sensing device for obtaining sharp images of permanent marks on a lens. The image sensing apparatus has a light source providing an illumination light beam passing through the lens. It includes a reflector for reflecting the illumination light beam after passing through the lens in order to pass again through the lens to impinge on an image sensing device which is connected to an imaging processing device.

Here, a spectacles lens blank is understood to mean a usually pre-shaped piece of material for producing a lens, in any state before the surface treatment has been completed. Spectacles lens semi-finished goods, which are also referred to as spectacles lens semi-finished products, are lens blanks where the optical processing has only been finished on one surface.

In order to provide a spectacles wearer with sharp vision, the spectacles lenses in a spectacles frame must be positioned and aligned correctly with respect to the eyes of the spectacles wearer. This is particularly important in the case of progressive power lenses. Progressive power lenses provide spectacles wearers with sharp vision at different ranges, without requiring accommodation of the eyes. Progressive power lenses have a distance reference point and a near reference point.

Specialists also refer to the near reference point and the distance reference point of progressive power lenses as near design reference point and distance design reference point respectively. A definition of these points is specified in Chapters 5.13 and 5.14 of the EN ISO 13666:1998 standard, the whole scope of which is referenced herewith.

However, optimum vision with progressive power lenses presupposes that the progressive power lenses held in a spectacles frame are positioned in front of the eyes of the spectacles wearer such that the position of the distance reference point and the position of the near reference point coincide with the corresponding viewing directions of the spectacles wearer into the distance and into the vicinity thereof. It is for this reason that, pursuant to the specifications in Section 7 of the standardization regulations DIN EN ISO 8980-2:2004, progressive power spectacles lenses must be permanently provided with at least two markings. Pursuant to the aforementioned standard, these at least two markings must exist on a progressive power spectacles lens with a spacing of 34 mm and must be arranged symmetrically with respect to a vertical plane through the fitting point or the prism reference point. These two markings define a local, body-specific coordinate system for the spectacles lens. These markings can be used to reconstruct in a spectacles lens both the lens horizontal and the distance and near reference points, the so-called fitting point defined in Chapter 5.24 of the EN ISO 13 666:1998 standard or the prism reference point defined in Chapter 14.2.12 of the EN ISO 13 666:1998 standard.

Pursuant to the EN ISO 13 666:1998 standard, the fitting point is a point on the front surface of a spectacles lens or spectacles lens semi-finished product, which, according to the specification from the manufacturer, should serve as reference point for positioning the spectacles lens in front of the eyes.

In the case of uncut spectacles lenses, which an optician receives from a spectacles lens manufacturer after measuring the spectacles, the position of these points is implicitly specified by the aforementioned markings. That is to say, an optician can establish the distance and near reference point, the fitting point and the prism reference point on the basis of the aforementioned markings. Pursuant to the EN ISO 13 666:1998 standard, the prism reference point is the point specified by a manufacturer on the front surface of a progressive power spectacles lens or a progressive power spectacles lens semi-finished product at which the prismatic effects of the completed lens have to be determined.

This makes it easier for an optician to align the uncut spectacles lens correctly prior to grinding and then to insert it into a spectacles frame in the correct position such that the spectacles wearer is provided with optimum vision.

In order to ensure that specifications on a spectacles lens do not have an adverse effect on the vision of the spectacles wearer, the specifications applied by the manufacturer to an uncut spectacles lens are removed as far as possible by an optician before the lens is inserted into a spectacles frame. The result of this is that e.g. the position of the near and distance reference point of a spectacles lens can only be established with comparatively much effort after being inserted into a spectacles frame.

An object of the invention is to save individual spectacles lens information on a glass- or plastic body in the form of a spectacles lens or a spectacles lens precursor, i.e. a spectacles lens blank or a spectacles lens semi-finished product, such that the vision of a spectacles wearer therethrough is not adversely affected and that this information can also be accessed when the spectacles lens, or a spectacles lens manufactured from the spectacles lens blank, is inserted into a spectacles frame or has fallen out of a spectacles frame.

This object is achieved by a method for storing information in the form of data on a glass- or plastic body embodied as spectacles lens, spectacles lens blank or spectacles lens semi-finished product, in which the information on or in the glass- or plastic body is stored by creating at least one permanent marking, which can be read by a reader, by means of a marking system, which has an interface for reading information individualizing this glass- or plastic body, with the at least one permanent marking being created on or in the glass- or plastic body at a definition point of a local body-specific coordinate system set by two points on or in the glass- or plastic body, for the manufacturer-side specification of the position of the lens horizontal and/or the distance and/or the near and/or the prism reference point.

Within the context of this invention, data is, pursuant to the DIN ISO/IEC 2382 standard, in this case understood to mean structures of signs or continuous functions, which constitute information as a result of known or implied conditions.

The method according to the invention renders it possible to store information individualizing a spectacles lens permanently on a spectacles lens glass- or plastic body, without this needing to exceed the number of permanent markings prescribed in the standardization regulation DIN EN ISO 8980-2:2004.

Here, information individualizing a spectacles lens is understood to mean information which is different for each spectacles lens in a large set with billions of spectacles lenses, corresponding to a chassis number in motor vehicles. By way of example, a natural number with sufficiently many digits is suitable as information individualizing a spectacles lens. The information individualizing a spectacles lens more particularly renders it possible to avoid mix ups between spectacles lenses or spectacles lens blanks in an operating manufacturing process, through which several 10 000 spectacles lens blanks often pass in one day. Individualization information for spectacles lenses also makes it easier to search for errors in a manufacturing process because, accordingly, manufacturing errors in individual spectacles lenses can then be related to specific process steps. Spectacles lens manufacturing can also be automated more easily with information that individualizes spectacles lenses and is stored on the spectacles lenses because the individual glass- or plastic bodies can be uniquely identified before, during or after each process step during manufacturing, and hence a so-called batch tracking is possible. Moreover, information individualizing a single spectacles lens can simplify and improve the quality control of spectacles lenses over the manufacturing process.

The long-lasting marking applied to the spectacles lens by the marking system is a permanent marking. Here, a permanent marking of a glass- or plastic body in the form of a spectacles lens, spectacles lens blank or spectacles lens semi-finished product is understood to mean a marking which adheres to a spectacles lens over the whole service life thereof.

In particular, such a permanent marking provides protection against brand piracy because it can be used to identify a spectacles lens uniquely. By way of example, the permanent marking can be created by laser engraving, chiseling, micro-drilling, impressing or printing.

The marking created on or in the glass- or plastic body being a phase object renders it possible that this marking is not visible to a spectacles wearer when wearing corresponding spectacles and does not bother the spectacles wearer.

Here, a phase object is understood to mean an object which, when irradiated by light in the visible spectral range, only changes the phase of the light waves passing through the object without there being a significant influence on the amplitude of the light waves in the process. To the unarmed eye of an observer, i.e. an eye without artificial visual aids, the marking on or in the glass- or plastic body of a spectacles lens then is invisible.

A high-quality phase object marking in a spectacles lens glass- or plastic body can be created by an excimer laser in particular. It is possible to use such an excimer laser to create a marking by burning a multiplicity of pixels into a glass- or plastic body embodied as spectacles lens, spectacles lens blank or semi-finished product. Here, one discovery of the invention is that this marking does not adversely affect the vision of a spectacles wearer if the pixels have a diameter D lying in the range 60 µm ≤ D ≤ 100 µm and have a depth T which is 0.5 µm ≤ T ≤ 2.5 µm. Such a marking renders it possible to store information in the form of a digital code on a spectacles lens glass- or plastic body, which code is composed of individual pixels. The digital code can be a data matrix code, more particularly a data matrix code pursuant to the ISO/IEC 16022:2000 standard, e.g. a DataMatrix ECC200 code. In the process, it was found that a marking with a square external contour which has a side length A of between 1.5 mm and 2.5 mm is able to store about 1600 bits of information, i.e. the information of more than 1 billion numbers. As a result of the geometric centroid of the convex envelope of the marking, e.g. the data matrix code, being a definition point of a local coordinate system defining the lens horizontal and/or the distance and/or the near reference point, a definition point of this coordinate system can be specified very precisely.

Such a code renders it possible to create patterns with a contour, the convex envelope of which reproduces a trademark and/or a company logo. In particular, such a code can replicate a trademark and/or company logo created by laser inscription or printing on the spectacles lens.

An idea of the invention is also to use such a pattern of the pixels which form a data matrix code, and a further marking, for example embodied as trademark and/or company logo, created on or in the glass- or plastic body to define the local glass- or plastic body coordinate system for the manufacturer-side specification of the position of the lens horizontal and/or the distance and/or the near and/or the prism reference point.

A spectacles lens, on which information is stored such that the spectacles lens is individualized as a result thereof and the position of the local coordinate system is specified, allows fast identification of assembly errors in a spectacles frame, particularly in the case of progressive power lenses. Such a spectacles lens with the information stored thereon can also be protected from forgery.

A device enabling the storage of information on a glass- or plastic body in the form of a spectacles lens, spectacles lens semi-finished product or spectacles lens blank contains an interface connected to a marking system, for reading digital information that individualizes the spectacles lens. The marking system is coupled to a referencing arrangement for establishing the relative position of the spectacles lens coordinate system with respect to the coordinates of the marking system. The interface transmits information that individualizes the glass- or plastic body to the marking system. In the process, it creates a marking containing this information on the spectacles lens. In the process, the marking system applies the marking to a definition point of a local glass- or plastic body coordinate system, i.e. a body-specific coordinate system, which defines the lens horizontal and/or the distance and/or the near reference point and/or the prism reference point.

The information stored on a spectacles lens glass- or plastic body as described above can then be read by a reader. Such a reader preferably contains a light source for generating an illumination light beam which passes through a spectacles lens to be read. After passing through the spectacles lens, said illumination light beam is reflected at a reflector. Thus it once again passes through the spectacles lens and is then fed to a camera. This camera is connected to a computer unit which contains a program storage medium with an evaluation program for capturing and decoding the digital information from the marking.

The invention is defined in the claims and will be explained in more detail below on the basis of the exemplary embodiments illustrated in the drawing in a schematic fashion.

In detail:
- Figure 1: shows progressive power spectacles with spectacles lenses;
- Figure 2: shows a spectacles lens of the progressive power spectacles with markings that define a local coordinate system;
- Figure 3: shows a section of the spectacles lens with a marking in the form of a data matrix code;
- Figure 4: shows a section of a further spectacles lens with a marking composed of pixels;
- Figure 5: shows a spectacles lens blank with markings that define a local coordinate system;
- Figure 6: shows a device for marking spectacles lenses with a data matrix code;and
- Figure 7: shows a device for reading the information stored on a spectacles lens by means of a data matrix code.

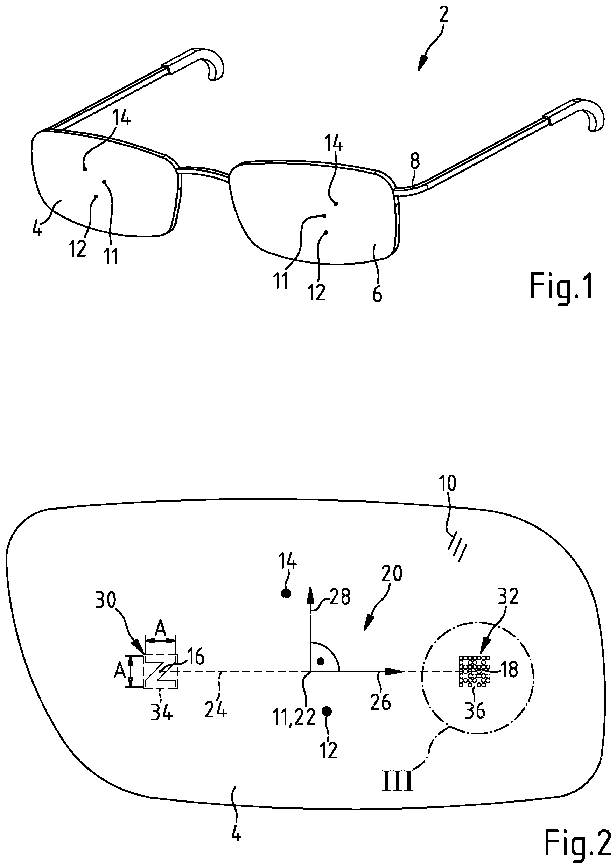

The progressive power spectacles 2 in figure 1 have two glass- or plastic bodies 4, 6, namely a first progressive power spectacles lens 4 and a second progressive power spectacles lens 6. The spectacles lenses 4, 6 are fixed in a spectacles frame 8. The topography of the spectacles lenses 4, 6 is fitted to the individual visual requirements of a spectacles wearer. The spectacles lenses 4, 6 each contain a prism reference point 11. They each have a near reference point 12 and a distance reference point 14. In respect of the near reference point 12 and the distance reference point 14, a spectacles lens manufacturer also specifies the refractive index of the spectacles lens there for an optician so that the latter can check the spectacles lens obtained from the manufacturer. In respect of the prism reference point 11, the manufacturer provides an optician with the specific prismatic effect of the spectacles lens.

Figure 2 shows the spectacles lens 4 of the progressive power spectacles 2 from figure 1 in a magnified view. On lens surface 10 facing an observation object, the spectacles lens 4 has a marking point 16 and a marking point 18. The marking points 16, 18 define a local body-specific glass- or plastic body coordinate system 20 for the spectacles lens 4. The local glass- or plastic body coordinate system 20 has an origin 22 which, for example, coincides with the prism reference point 11 of the spectacles lens 4 and which is situated at the centre of the imaginary connecting line 24 between the marking points 16, 18. The X-axis 26 of this local glass- or plastic body coordinate system 20 is parallel to the imagined connecting line 24. The profile of the X-axis of the local glass body coordinate system 20 corresponds to the lens horizontal of the spectacles lens 4. The Y-axis 28 of the coordinate system 20 is perpendicular to the imagined connecting line 24. The marking points 16, 18 are the two definition points for the local glass body coordinate system 20 of the spectacles lens 4.

The spectacles lens 4 has respectively one marking 30, 32 in the marking point 16 and in the marking point 18. The markings 30, 32 are permanent markings. The markings 30, 32 are composed of a multiplicity of pixels. The markings 30, 32 are manufactured by laser engraving. The set of pixels of the markings 30, 32 respectively has a convex envelope 34, 36 with a square external contour. Here, in accordance with the definition of "convex envelope" specified in the German "Wikipedia", the convex envelope of a set is understood to mean the smallest convex set containing the set.

The side length A of the square external contour of the convex envelope 34, 36 is respectively 2 mm. The position of the marking points 16, 18 is specified on the spectacles lens 4 by the position of the markings 30, 32. The location of the geometric centroid of the convex envelope 34, 36 of the marking 30, 32, i.e. the surface surrounded by the square external contour of the convex envelope 34, 36, corresponds to the geometric location of the marking points 16, 18. The markings 30, 32 are phase objects. They are therefore invisible to a spectacles wearer when wearing the spectacles. The marking 30 is designed as company logo.

In the coordinate system 20, the points of the near reference point 12 and the distance reference point 14 can be uniquely described by the tuple of numbers (x_{N}, y_{N}) for the near reference point and the tuple of numbers (x_{F}, y_{F}) for the distance reference point.

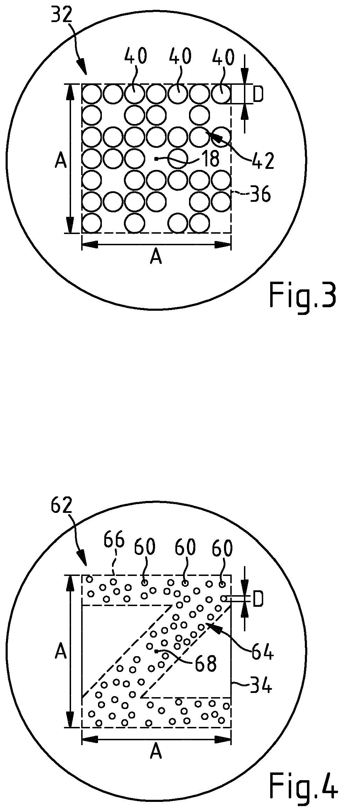

Figure 3 shows a section III of the spectacles lens 4 from Figure 2. The marking 32 is a data matrix code. The data matrix code contains data. This data matrix code corresponds to the ISO/IEC 16022:2000 standard. The marking 32 consists of a multiplicity of pixels 40. The pixels 40 have a diameter D = 80 µm. The pixels are burnt into the spectacles lens with a depth of T = 2 µm by means of laser radiation from an excimer laser. The arrangement of the pixels 40 defines information in the data matrix code.

The information from the data matrix code of the marking 32 individualizes the spectacles lens 4. To this end, the information in the marking 32 consists of a database address for a database in which specifications of the spectacles lens manufacturer in respect of the spectacles lens are stored. Alternatively, or in addition thereto, the data matrix code of the marking 32 can contain the information in respect of the points of the near reference point 12 and the distance reference point 14 in the form of the tuple of numbers (x_{N}, y_{N}) for the near reference point and the tuple of numbers (x_{F}, y_{F}) for the distance reference point. Moreover, the data matrix code of the marking 32 can alternatively, or in addition thereto, also comprise the information in respect of the material of the spectacles lens, the refractive index thereof and the value of the curvatures of the spectacles lens 4 on the front surface and back surface, at the distance and near reference points 14, 12 or at the positions opposite these points.

Figure 4 shows a section of a further spectacles lens with a marking 62 composed of pixels 60. The diameter D of the pixels 60 corresponds to D ≈ 80 µm. The pixels 60 are also burnt into the spectacles lens to a depth of T ≈ 2 µm by means of laser radiation from an excimer laser. The arrangement of the pixels 60 is encoded information which individualizes the corresponding spectacles lens and which can be read by a suitable reader. Here, the pixels 60 of the marking 62 form a pattern 64, the outer contour 66 of which reproduces a company logo or trademark, which corresponds to the letter Z. The geometric centroid 68 of the convex envelope 34 corresponds to a marking point in the spectacles lens.

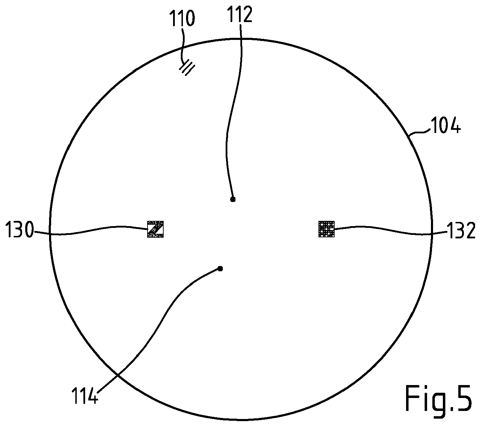

Figure 5 shows a glass- or plastic body embodied as spectacles lens blank 104. The spectacles lens blank 104 has markings 130, 132 which correspond to the markings 30, 32 on the spectacles lens 4 from figure 1. The markings 130, 132 are situated on the image-side surface of the spectacles lens blank 104, i.e. on the surface facing away from the object. Information individualizing the spectacles lens blank 104, e.g. an address in a database in which manufacturing-related data with respect to the spectacles lens blank 104 is stored, is stored thereon in the form of the marking 132. This manufacturing-related data can include e.g. the material of the spectacles lens, the refractive index thereof, the coordinates of the distance and near region points 114, 112, the value of the curvatures of the spectacles lens 104 on the front surface and back surface, at the distance and near region points 114, 112 or at the positions opposite these points, and also the date and location of the spectacles lens manufacture.

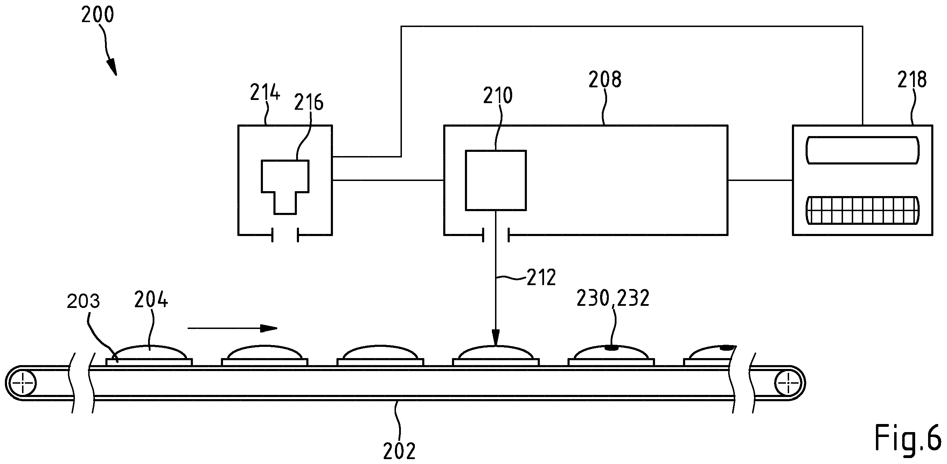

Figure 6 shows a device 200 for marking spectacles lens semi-finished products or lens blanks 204 with a data matrix code. The device 200 contains a conveying apparatus 202, on which the spectacles lens blanks 204 are fed to a marking system 208.

The spectacles lens blanks 204 are arranged on a supporting device 203. For example the spectacles lens blanks 204 can be blocked on such supporting device. In the supporting device 203, the position of the local coordinate system of the spectacles lens blank 204 is well defined with respect to the local coordinate system of the supporting device 203.

The marking system 208 comprises an excimer laser 210. The excimer laser 210 generates a spatially displaceable laser beam 212, by means of which a data matrix code can be written into a spectacles lens semi-finished product 204. However, in principle, the device 200 can also be used to mark finished spectacles lenses and raw spectacles lens blanks.

It is possible also to design the marking system 208 for marking spectacles lens glass- or plastic bodies by chiselling, micro-drilling, impressing or printing.

A referencing arrangement 214 with a camera 216 is in the device 200. The referencing arrangement 214 is used to reference the spatial coordinates of the glass- or plastic bodies in the form of a spectacles lens, a spectacles lens semi-finished product or a spectacles lens blank 204, which was fed to the marking system 208, with respect to a coordinate system affixed to the marking system 208. For referencing the spatial coordinates of the glass- or plastic bodies 204, the geometry of the supporting device 203 is viewed with the camera 216 using image processing and relating the local coordinate system of the spectacles lens blank 204 affixed to the marking system 208.

It is to be noted that the referencing arrangement 214 also could be an adapter for a supporting device 203 for the spectacles lens blanks 204, e.g. an adapter which is formed as a chuck, in which the supporting device 203 can have only a single well defined relative position in the coordinate system of the marking system 208.

These coordinates are transmitted to the marking system 208. This ensures that the marking system 208 can be used to write a data matrix code, which is oriented and arranged in a defined fashion with respect to a local coordinate system of the glass- or plastic body, onto such a glass body 204. The device 200 has an interface 218 for reading individualization information for a glass- or plastic body. This individualization information can for example, as mentioned above, be an address under which manufacturing-specific data in respect of the glass- or plastic body are correspondingly stored in a database. The individualization information can also comprise a running number, which specifies optical parameters of the spectacles lens blank, the material of which the spectacles lens blank consists, and the location and date of the manufacture thereof. This information is transmitted to the marking system 208, in order to store it in the form of a data matrix code on a spectacles lens blank 204.

To this end, the laser beam 212 from the marking system 208 in the device 200 is used to write the appropriate data matrix code into each glass body 204, in the form of a marking 230 on a first marking point of the glass- or plastic body 204. A further marking 332 is additionally applied to the second marking point. The further marking 332 is a trademark or a company logo.

On the glass- or plastic body 204, the position of the markings 230, 232 defines the lens horizontal and the local coordinate system in which the coordinates stored in the data matrix code of the marking 232 specify the distance and near reference point of the spectacles lens glass- or plastic body 204.

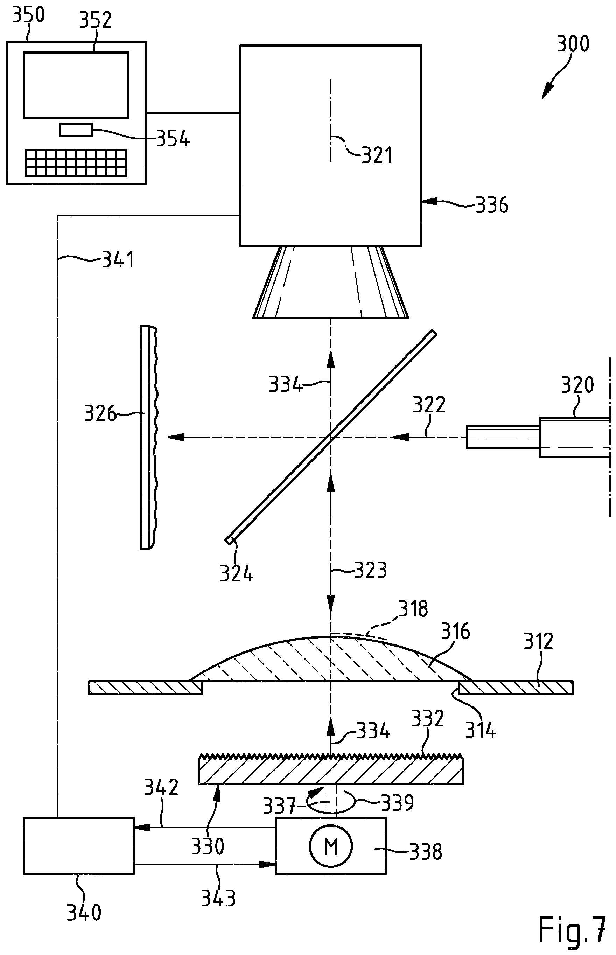

Figure 7 shows a device 300 by means of which the information stored on a spectacles lens in the form of a data matrix code can be read.

The device 300 has a spectacles lens holder 312. The spectacles lens holder 312 has a cut-out 314. A spectacles lens 316 with a marking 318 in the form of a data matrix code is situated in the holder. The device 300 contains a light source 320 for illumination light and a beam splitter 324. The light source 320 generates light which is guided to the beam splitter 324 with an optical beam path 322. The beam splitter deflects a first part of this light to the spectacles lens 314 with the beam path 323. This light passes through the spectacles lens 316 and is reflected at a rotating retroreflector 332. The light reflected by the retroreflector 332 once again passes through the spectacles lens 316 with the beam path 334 and is fed to a digital camera 336 via the beam splitter 324. The digital camera 336 has an optical axis 321. As a result of the optical axis 321 of the digital camera 336 lying flush with the optical axis of the beam path 334, it is possible to achieve good imaging quality for spectacles lens markings in the camera.

There is a motor 338 in the device 300 for rotating the retroreflector 332; said motor is connected to the retroreflector 332 via a drive shaft 339. In order to capture the light from the light source 320 which passes through the beam splitter 324 in the direction of the beam path 322, the device 300 contains a light trap 326.

Rotating the retroreflector 332 brings about a homogenization of the image background with which the digital camera 336 captures the marking 318 on the spectacles lens 304. To this end, a control instrument 340 is used to synchronize the rotational movement of the retroreflector 332 with the times of an image recording by the digital camera 336 by means of electrical connection lines 341, 342, 343.

The device 300 contains a computer unit 350 with an output interface in the form of a monitor 352. The computer unit 350 is connected to the digital camera 336. The computer unit 350 has a program storage medium 354 for capturing and decoding a marking 318, embodied as data matrix code, of a spectacles lens 316.

In order to read the data matrix code on a spectacles lens 316, illumination light passes through the spectacles lens 316 while the retroreflector 332 is moving and the section of the spectacles lens 316 with the marking 318 embodied as data matrix code is recorded by the digital camera 336. The image recorded in the process is read and processed by the computer unit 350 in order to display the decoded information of the data matrix code on the monitor 352.

The spectacles lens blanks 204 are arranged on a supporting device 203. For example the spectacles lens blanks 204 can be blocked on such supporting device. In the supporting device 203, the position of the local coordinate system of the spectacles lens blank 204 is well defined with respect to the local coordinate system of the supporting device 203.

The marking system 208 comprises an excimer laser 210. The excimer laser 210 generates a spatially displaceable laser beam 212, by means of which a data matrix code can be written into a spectacles lens semi-finished product 204. However, in principle, the device 200 can also be used to mark finished spectacles lenses and raw spectacles lens blanks.

It is possible also to design the marking system 208 for marking spectacles lens glass- or plastic bodies by chiselling, micro-drilling, impressing or printing.

A referencing arrangement 214 with a camera 216 is in the device 200. The referencing arrangement 214 is used to reference the spatial coordinates of the glass- or plastic bodies in the form of a spectacles lens, a spectacles lens semi-finished product or a spectacles lens blank 204, which was fed to the marking system 208, with respect to a coordinate system affixed to the marking system 208. For referencing the spatial coordinates of the glass- or plastic bodies 204, the geometry of the supporting device 203 is viewed with the camera 216 using image processing and relating the local coordinate system of the spectacles lens blank 204 affixed to the marking system 208.

It is to be noted that the referencing arrangement 214 also could be an adapter for a supporting device 203 for the spectacles lens blanks 204, e.g. an adapter which is formed as a chuck, in which the supporting device 203 can have only a single well defined relative position in the coordinate system of the marking system 208.

These coordinates are transmitted to the marking system 208. This ensures that the marking system 208 can be used to write a data matrix code, which is oriented and arranged in a defined fashion with respect to a local coordinate system of the glass- or plastic body, onto such a glass body 204. The device 200 has an interface 218 for reading individualization information for a glass- or plastic body. This individualization information can for example, as mentioned above, be an address under which manufacturing-specific data in respect of the glass- or plastic body are correspondingly stored in a database. The individualization information can also comprise a running number, which specifies optical parameters of the spectacles lens blank, the material of which the spectacles lens blank consists, and the location and date of the manufacture thereof. This information is transmitted to the marking system 208, in order to store it in the form of a data matrix code on a spectacles lens blank 204.

To this end, the laser beam 212 from the marking system 208 in the device 200 is used to write the appropriate data matrix code into each glass body 204, in the form of a marking 230 on a first marking point of the glass- or plastic body 204. A further marking 332 is additionally applied to the second marking point. The further marking 332 is a trademark or a company logo.

On the glass- or plastic body 204, the position of the markings 230, 232 defines the lens horizontal and the local coordinate system in which the coordinates stored in the data matrix code of the marking 232 specify the distance and near reference point of the spectacles lens glass- or plastic body 204.

Figure 7 shows a device 300 by means of which the information stored on a spectacles lens in the form of a data matrix code can be read.

The device 300 has a spectacles lens holder 312. The spectacles lens holder 312 has a cut-out 314. A spectacles lens 316 with a marking 318 in the form of a data matrix code is situated in the holder. The device 300 contains a light source 320 for illumination light and a beam splitter 324. The light source 320 generates light which is guided to the beam splitter 324 with an optical beam path 322. The beam splitter deflects a first part of this light to the spectacles lens 314 with the beam path 323. This light passes through the spectacles lens 316 and is reflected at a rotating retroreflector 332. The light reflected by the retroreflector 332 once again passes through the spectacles lens 316 with the beam path 334 and is fed to a digital camera 336 via the beam splitter 324. The digital camera 336 has an optical axis 321. As a result of the optical axis 321 of the digital camera 336 lying flush with the optical axis of the beam path 334, it is possible to achieve good imaging quality for spectacles lens markings in the camera.

There is a motor 338 in the device 300 for rotating the retroreflector 332; said motor is connected to the retroreflector 332 via a drive shaft 339. In order to capture the light from the light source 320 which passes through the beam splitter 324 in the direction of the beam path 322, the device 300 contains a light trap 326.

Rotating the retroreflector 332 brings about a homogenization of the image background with which the digital camera 336 captures the marking 318 on the spectacles lens 304. To this end, a control instrument 340 is used to synchronize the rotational movement of the retroreflector 332 with the times of an image recording by the digital camera 336 by means of electrical connection lines 341, 342, 343.

The device 300 contains a computer unit 350 with an output interface in the form of a monitor 352. The computer unit 350 is connected to the digital camera 336. The computer unit 350 has a program storage medium 354 for capturing and decoding a marking 318, embodied as data matrix code, of a spectacles lens 316.

In order to read the data matrix code on a spectacles lens 316, illumination light passes through the spectacles lens 316 while the retroreflector 332 is moving and the section of the spectacles lens 316 with the marking 318 embodied as data matrix code is recorded by the digital camera 336. The image recorded in the process is read and processed by the computer unit 350 in order to display the decoded information of the data matrix code on the monitor 352.

In conclusion, the following preferred features of the invention in particular should be retained: On a glass- or plastic body embodied as spectacles lens 4, spectacles lens blank 104 or spectacles lens semi-finished product 204, information in the form of data on or in the glass- or plastic body 4, 104, 204 is stored by creating at least one marking 32, 62, 130, 230, which can be read by a reader 300, by means of a marking system 200. The marking system 200 has an interface 218 for reading information individualizing this glass- or plastic body 4, 104, 204. The at least one marking 32, 62, 130, 230 is created permanently by the marking system 200 on or in the glass body 4, 104, 204 at a definition point 16 of a local coordinate system 20 set by two points 16, 18 on or in the glass- or plastic body 4, 104, 204, for the manufacturer-side specification of the position of the lens horizontal 24 and/or the distance and/or the near and/or the prism reference point 16, 11, 18.

## Claims

1. Device (300) for reading digital information stored on a glass or plastic body embodied as a spectacles lens (4), spectacles lens blank (104) or spectacles lens semi-finished product (204) for a progressive power spectacles lens having a permanent marking (32) and a further permanent marking (30), wherein one of said markings contains information in the form of a data matrix code which individualizes the glass or plastic body (4), said data matrix code comprising the positions of the near reference point (12) and the distance reference point (14) in the form of the tuple of numbers (xN, yN) for the near reference point and the tuple of numbers (xF, yF) for the distance reference point with respect to said coordinate system, said device comprising a light source (320) which is adapted for generating an illumination light beam (322, 323) and for directing said illumination light beam (322, 323) onto the glass or plastic body (316), said illumination light beam (322, 323) passing through said glass or plastic body (316); a digital camera (336) having an optical axis (321); and a computer unit (350) which contains a program storage medium (354) with an evaluation program for capturing and decoding the information from said permanent marking (318), said permanent marking (32) being arranged on or in the glass or plastic body (4, 104, 204) at a definition point (18) of the local glass or plastic body coordinate system (20) as it is defined for example by the standardization regulations DIN EN IS O 8980-2:2004, and said further permanent marking (30) being arranged on or in said glass or plastic body (4, 104, 204) at a definition point (18) of the local glass or plastic body coordinate system (20) as it is defined for example by the standardization regulations DIN EN ISO 8980-2:2004, wherein said device further comprises
a spectacles lens holder (316) which is adapted to hold said glass or plastic body,
a retroreflector (332) for reflecting said illumination light beam (322, 323) after passing through said glass or plastic body (316) in order once again to pass through said glass or plastic body (316), wherein said camera (336) is adapted to receive said illumination light beam (322, 323) after having once again passed through said glass or plastic body (316), and wherein
said computer unit (350) is connected to said camera (336) for reading said illumination light beam (322,323),
said program storage medium including a program for finding the location of said permanent marking (32) containing said information in the form of data which individualizes the glass or plastic body (4) and extracting said information therefrom.

2. Device (300) according to claim 1, **characterized in that** the spectacle lens holder (312) has a cut-out (314) and a spectacle lens (316) with a marking (318) is situated in the holder.

3. Device (300) according to any of the preceding claims, **characterized in that** the device (300) comprises a motor (338) for rotating the retroreflector (332), said motor being connected to the retroreflector (332).

4. Device (300) according to any of the preceding claims, **characterized in that** the device (300) contains a light trap (326).

5. Device (300) according to any of the preceding claims, **characterized in that** rotating the retroreflector (332) brings about a homogenization of the image background with which the digital camera (336) captures the marking (318) on the spectacles lens (304).

6. Device (300) according to claim 5, **characterized in that** a control instrument (340) is used to synchronize the rotational movement of the retroreflector (332) with the times of an image recording by the digital camera (336) by means of electrical connection lines (341, 342, 343).

7. Device (300) according to any of the preceding claims, **characterized in that** the device (300) contains a computer unit (350) with an output interface in the form of a monitor (352), the computer unit (350) being connected to the digital camera (336).

8. Device (300) according to claim 7, **characterized in that** the computer unit (350) has a program storage medium (354) for capturing and decoding a marking (318) of a spectacle lens (316).

9. Method for reading digital information stored on a glass- or plastic body embodied as a progressive power spectacles lens (4), a spectacles lens blank (104) for a progressive power spectacles lens or a spectacles lens semi-finished product (204) for a progressive power spectacles lens, said method comprising
providing a progressive power spectacles lens having a permanent marking (32) and a further permanent marking (30) arranged on or in the glass- or plastic body (4, 104, 204),
whereby one of said permanent markings (30, 32) contains information in the form of a data matrix code which individualizes the glass- or plastic body (4),
providing an illumination light beam (322, 323),
directing said illumination light beam (322, 323) at said glass- or plastic body (316),
said illumination light beam (322, 323) passing through the glass- or plastic body (316) and
providing a digital camera (336) having an optical axis (321), and providing a computer unit (350) which contains a program storage medium (354) with an evaluation program for capturing and decoding the information from said permanent marking (318) containing information in the form of data which individualizes the glass- or plastic body (4),
said permanent marking (32) is arranged at a definition point (18) of the local glass- or plastic body coordinate system (20) as it is defined by the standardization regulations DIN EN ISO 8980 -2:2004, and
said further permanent marking (30) arranged on or in the glass- or plastic body (4, 104, 204) at a definition point (18) of the local glass- or plastic body coordinate system (20) as it is defined by the standardization regulations DIN EN ISO 8980-2:2004, and
said method further comprising
providing a retroreflector (332), for reflecting said illumination light beam (322, 323) after passing through the glass- or plastic body (316)
in order once again to pass through said glass- or plastic body (316) and then
being fed to said camera (336), which is connected to said computer unit (350);
said program storage medium is including a program for finding the location of said permanent marking (32) containing said information in the form of data which individualizes the glass- or plastic body (4) and extracting said information therefrom;
said data matrix code comprising the positions of the near reference point (12) and the distance reference point (14) in the form of the tuple of numbers (x_{N}, y_{N}) for the near reference point and the tuple of numbers (x_{F}, y_{F}) for the distance reference point with respect to said coordinate system.

10. The method of claim 9, **characterized in that** said method is further comprising the steps of
providing a spectacles lens holder (312) which is adapted to hold said glass- or plastic body and which is having a cut-out (314);
whereby said optical axis (321) of said camera (336) is passing through said cut-out (314); and
whereby said illumination light beam (322, 323) is passing through said cut-out (314);
providing a retroreflector (332), for reflecting said illumination light beam (322, 323) after passing through the glass- or plastic body (316) and said cut-out (314)
in order once again to pass through said cut-out (314) and said glass- or plastic body (316) and then
being fed to said camera (336), which is connected to said computer unit (350).

11. The method of claim 9 or claim 10, **characterized in that** said permanent marking (32) and said further permanent marking (30) is a phase object.

12. Method according to any of the preceding claims, **characterized in that** illumination light passes through the spectacles lens (316) while the retroreflector (332) is moving and the section of the spectacles lens (316) with the marking (318) embodied as data matrix code is recorded by the digital camera (336).

13. Method according to claim 12, **characterized in that** the image recorded in the process is read and processed by the computer unit (350) in order to display the decoded information of the data matrix code on the monitor (352).

## Patentansprüche

1. Vorrichtung (300) zum Lesen von digitalen Informationen, die auf einem Glas- oder Kunststoffkörper gespeichert sind, der als eine Brillenlinse (4), ein Brillenlinsenrohteil (104) oder ein halbfertiges Brillenlinsenprodukt (204) für eine Gleitsichtbrillenlinse mit einer dauerhaften Markierung (32) und einer weiteren dauerhaften Markierung (30) verkörpert ist, wobei eine der Markierungen Informationen in Form eines Datenmatrixcodes enthält, der den Glas- oder Kunststoffkörper (4) individualisiert, wobei der Datenmatrixcode die Positionen des Nahreferenzpunkts (12) und des Fernreferenzpunkts (14) in Form des Tupels von Zahlen (xN, yN) für den Nahreferenzpunkt und des Tupels von Zahlen (xF, yF) für den Fernreferenzpunkt in Bezug auf das Koordinatensystem enthält, wobei die Vorrichtung Folgendes umfasst: eine Lichtquelle (320), die ausgelegt ist, einen Beleuchtungslichtstrahl (322, 323) zu erzeugen und den Beleuchtungslichtstrahl (322, 323) auf den Glas- oder Kunststoffkörper (316) zu richten, wobei der Beleuchtungslichtstrahl (322, 323) durch den Glas- oder Kunststoffkörper (316) hindurchführt; eine digitale Kamera (336) mit einer optischen Achse (321); und eine Computereinheit (350), die ein Programmspeichermedium (354) mit einem Auswertungsprogramm zum Aufnehmen und Decodieren der Informationen von der dauerhaften Markierung (318) enthält, wobei die dauerhafte Markierung (32) auf oder in dem Glas- oder Kunststoffkörper (4, 104 204) an einem Definitionspunkt (18) des lokalen Glas- oder Kunststoffkörperkoordinatensystems (20), wie es zum Beispiel durch die Normierungsreglementierungen DIN EN ISO 8980-2:2004 definiert ist, angeordnet ist, und die weitere dauerhafte Markierung (30) auf oder in dem Glas- oder Kunststoffkörper (4, 104, 204) an einem Definitionspunkt (18) des lokalen Glas- oder Kunststoffkörperkoordinatensystem (20), wie es zum Beispiel durch die Normierungsreglementierungen DIN EN ISO 8980-2:2004 definiert ist, angeordnet ist, wobei die Vorrichtung ferner Folgendes umfasst:
einen Brillenlinsenhalter (316), der ausgelegt ist, den Glas- oder Kunststoffkörper zu halten,
einen Retroreflektor (332) zum Reflektieren des Beleuchtungslichtstrahls (322, 323) nach dem Hindurchführen durch den Glas- oder Kunststoffkörper (316), um ihn nochmals durch den Glas- oder Kunststoffkörper (316) hindurchzuführen, wobei die Kamera (336) ausgelegt ist, den Beleuchtungslichtstrahl (322, 323) zu empfangen, nachdem er nochmals durch den Glas- oder Kunststoffkörper (316) hindurchgeführt wurde, und wobei
die Computereinheit (350) mit der Kamera (336) verbunden ist, um den Beleuchtungslichtstrahl (322, 323) zu lesen,
das Programmspeichermedium ein Programm enthält, um den Ort der dauerhaften Markierung (32), die die Informationen in Form von Daten enthält, die den Glas- oder Kunststoffkörper (4) individualisieren, zu finden und die Informationen von dort zu extrahieren.

2. Vorrichtung (300) nach Anspruch 1, **dadurch gekennzeichnet, dass** der Brillenlinsenhalter (312) einen Ausschnitt (314) besitzt und sich eine Brillenlinse (316) mit einer Markierung (318) in dem Halter befindet.

3. Vorrichtung (300) nach einem der vorhergehenden Ansprüche, **dadurch gekennzeichnet, dass** die Vorrichtung (300) einen Motor (338) enthält, um den Retroreflektor (332) zu drehen, wobei der Motor mit dem Retroreflektor (332) verbunden ist.

4. Vorrichtung (300) nach einem der vorhergehenden Ansprüche, **dadurch gekennzeichnet, dass** die Vorrichtung (300) eine Lichtfalle (326) enthält.

5. Vorrichtung (300) nach einem der vorhergehenden Ansprüche, **dadurch gekennzeichnet, dass** das Drehen des Retroreflektors (332) eine Homogenisierung des Bildhintergrunds, mit dem die digitale Kamera (336) die Markierung (318) auf der Brillenlinse (304) aufnimmt, herbeiführt.

6. Vorrichtung (300) nach Anspruch 5, **dadurch gekennzeichnet, dass** ein Steuerinstrument (340) verwendet wird, um die Drehbewegung des Retroreflektors (332) mit den Zeiten einer Bildaufzeichnung durch die digitale Kamera (336) mit Hilfe von elektrischen Verbindungsleitungen (341, 342, 343) zu synchronisieren.

7. Vorrichtung (300) nach einem der vorhergehenden Ansprüche, **dadurch gekennzeichnet, dass** die Vorrichtung (300) eine Computereinheit (350) mit einer Ausgangsschnittstelle in Form eines Monitors (352) umfasst, wobei die Computereinheit (350) mit der digitalen Kamera (336) verbunden ist.

8. Vorrichtung (300) nach Anspruch 7, **dadurch gekennzeichnet, dass** die Computereinheit (350) ein Programmspeichermedium (354) zum Aufnehmen und Decodieren einer Markierung (318) einer Brillenlinse (316) besitzt.

9. Verfahren zum Lesen von digitalen Informationen, die auf einem Glas- oder Kunststoffkörper, der als eine Gleitsichtlinse (4), ein Brillenlinsenrohteil (104) für eine Gleitsichtbrillenlinse oder ein halbfertiges Brillenlinsenprodukt (204) für eine Gleitsichtbrillenlinse verkörpert ist, gespeichert sind, wobei das Verfahren Folgendes umfasst:
Bereitstellen einer Gleitsichtbrillenlinse mit einer dauerhaften Markierung (32) und einer weiteren dauerhaften Markierung (30), die auf oder in dem Glas- oder Kunststoffkörper (4, 104, 204) angeordnet sind,
wobei eine der dauerhaften Markierungen (30, 32) Informationen in Form eines Datenmatrixcodes enthält, der den Glas- oder Kunststoffkörper (4) individualisiert,
Bereitstellen eines Beleuchtungslichtstrahls (322, 323),
Richten des Beleuchtungslichtstrahls (322, 323) auf den Glas- oder Kunststoffkörper (316),
wobei der Beleuchtungslichtstrahl (322, 323) durch den Glas- oder Kunststoffkörper (316) hindurchführt, und
Bereitstellen einer digitalen Kamera (336) mit einer optischen Achse (321) und
Bereitstellen einer Computereinheit (350), die ein Programmspeichermedium (354) mit einem Auswertungsprogramm zum Aufnehmen und Decodieren der Informationen von der dauerhaften Markierung (318), die Informationen in Form von Daten enthält, die den Glas- oder Kunststoffkörper (4) individualisieren, enthält,
wobei die dauerhafte Markierung (32) an einem Definitionspunkt (18) des lokalen Glas- oder Kunststoffkörperkoordinatensystems (20), wie es durch die Normierungsreglementierungen DIN EN ISO 8980-2:2004 definiert ist, angeordnet ist, und
wobei die weitere dauerhafte Markierung (30) auf oder in dem Glas- oder Kunststoffkörper (4, 104, 204) an einem Definitionspunkt (18) des lokalen Glas- oder Kunststoffkörperkoordinatensystems (20), wie es durch die Normierungsreglementierungen DIN EN ISO 8980-2:2004 definiert ist, angeordnet ist und
wobei das Verfahren ferner Folgendes umfasst:
Bereitstellen eines Retroreflektors (332) zum Reflektieren des Beleuchtungslichtstrahls (322, 323) nach dem Hindurchführen durch den Glas- oder Kunststoffkörper (316),
um ihn nochmals durch den Glas- oder Kunststoffkörper (316) hindurchzuführen und dann
in die Kamera (336), die mit der Computereinheit (350) verbunden ist, einzuspeisen;
wobei das Programmspeichermedium ein Programm enthält, um den Ort der dauerhaften Markierung (32), die die Informationen in Form von Daten enthält, die den Glas- oder Kunststoffkörper (4) individualisieren, zu finden und die Informationen von dort zu extrahieren;
wobei der Datenmatrixcode die Positionen des Nahreferenzpunkts (12) und des Fernreferenzpunkts (14) in Form des Tupels von Zahlen (x_{N}, y_{N}) für den Nahreferenzpunkt und des Tupels von Zahlen (x_{F}, y_{F}) für den Fernreferenzpunkt in Bezug auf das Koordinatensystem enthält.

10. Verfahren nach Anspruch 9, **dadurch gekennzeichnet, dass** das Verfahren ferner die Schritte umfasst:
Bereitstellen eines Brillenlinsenhalters (312), der ausgelegt ist, den Glas- oder Kunststoffkörper zu halten und der einen Ausschnitt (314) besitzt;
wobei die optische Achse (321) der Kamera (336) durch den Ausschnitt (314) hindurchführt; und
wobei der Beleuchtungslichtstrahl (322, 323) durch den Ausschnitt (314) hindurchführt;
Bereitstellen eines Retroreflektors (332) zum Reflektieren des Beleuchtungslichtstrahls (322, 323) nach dem Hindurchführen durch den Glas- oder Kunststoffkörper (316) und den Ausschnitt (314),
um ihn nochmals durch den Ausschnitt (314) und den Glas- oder Kunststoffkörper (316) hindurchzuführen und dann
in die Kamera (336), die mit der Computereinheit (350) verbunden ist, einzuspeisen.

11. Verfahren nach Anspruch 9 oder Anspruch 10, **dadurch gekennzeichnet, dass** die dauerhafte Markierung (32) und die weitere dauerhafte Markierung (30) ein Phasenobjekt sind.

12. Verfahren nach einem der vorhergehenden Ansprüche, **dadurch gekennzeichnet, dass** der Beleuchtungslichtstrahl durch die Brillenlinse (316) hindurchgeführt wird, während der Retroreflektor (332) sich bewegt und der Abschnitt der Brillenlinse (316) mit der Markierung (318), die als ein Datenmatrixcode verkörpert ist, durch die digitale Kamera (336) aufgenommen wird.

13. Verfahren nach Anspruch 12, **dadurch gekennzeichnet, dass** das in dem Vorgang aufgezeichnete Bild durch die Computereinheit (350) gelesen und verarbeitet wird, um die decodierten Informationen des Datenmatrixcodes auf dem Monitor (352) anzuzeigen.

## Revendications

1. Dispositif (300) de lecture d'informations numériques stockées sur un corps de verre ou de plastique utilisé comme verre de lunettes (4), ébauche de verre de lunettes (104) ou produit semi-fini de verre de lunettes (204) pour un verre de lunettes de puissance progressive présentant un repère permanent (32) et un repère permanent supplémentaire (30), dans lequel l'un desdits repères contient des informations sous forme de code matriciel de données qui individualisent le corps de verre ou de plastique (4), ledit code matriciel de données comprenant les positions du point de référence proche (12) et du point de référence distant (14) sous forme de nuplet de nombres (xN, yN) pour le point de référence proche et de nuplet de nombres (xF, yF) pour le point de référence distant relativement audit système de coordonnées, ledit dispositif comprenant une source de lumière (320) adaptée pour générer un faisceau lumineux d'éclairage (322, 323) et pour diriger ledit faisceau lumineux d'éclairage (322, 323) sur le corps de verre ou de plastique (316), ledit faisceau lumineux d'éclairage (322, 323) traversant ledit corps de verre ou de plastique (316) ; une caméra numérique (336) ayant un axe optique (321) ; et une unité informatique (350) qui contient un support de mémorisation de programme (354) avec un programme d'évaluation pour capturer et décoder les informations dudit repère permanent (318), ledit repère permanent (32) étant agencé sur ou dans le corps de verre ou de plastique (4, 104, 204) à un point de définition (18) du système de coordonnées du corps de verre ou de plastique local (20) tel que défini par exemple par la réglementation de normalisation DIN EN ISO 8980-2:2004, et ledit repère permanent supplémentaire (30) étant agencé sur ou dans ledit corps de verre ou de plastique (4, 104, 204) à un point de définition (18) du système de coordonnées du corps de verre ou de plastique local (20) tel que défini par exemple par la réglementation de normalisation DIN EN ISO 8980-2:2004, dans lequel ledit dispositif comprend en outre
un support de verre de lunettes (316) adapté pour maintenir ledit corps de verre ou de plastique,
un rétroréflecteur (332) pour réfléchir ledit faisceau lumineux d'éclairage (322, 323) après son passage à travers ledit corps de verre ou de plastique (316) afin qu'il traverse à nouveau ledit corps de verre ou de plastique (316), dans lequel ladite caméra (336) est adaptée pour recevoir ledit faisceau lumineux d'éclairage (322, 323) après qu'il a traversé à nouveau ledit corps de verre ou de plastique (316), et dans lequel
ladite unité informatique (350) est connectée à ladite caméra (336) pour lire ledit faisceau lumineux d'éclairage (322,323),
ledit support de mémorisation de programme comportant un programme pour trouver l'emplacement dudit repère permanent (32) contenant lesdites informations sous forme de données qui individualisent le corps de verre ou de plastique (4) et extraire lesdites informations de celui-ci.

2. Dispositif (300) selon la revendication 1, **caractérisé en ce que** le support de verre de lunettes (312) comporte une découpe (314) et un verre de lunettes (316) présentant un repère (318) est placé dans le support.

3. Dispositif (300) selon l'une quelconque des revendications précédentes, **caractérisé en ce que** le dispositif (300) comprend un moteur (338) pour faire tourner le rétroréflecteur (332), ledit moteur étant connecté au rétroréflecteur (332).

4. Dispositif (300) selon l'une quelconque des revendications précédentes, **caractérisé en ce que** le dispositif (300) contient un piège à lumière (326) .

5. Dispositif (300) selon l'une quelconque des revendications précédentes, **caractérisé en ce que** la rotation du rétroréflecteur (332) engendre un homogénéisation du fond d'image avec lequel la caméra numérique (336) capture le repère (318) sur le verre de lunettes (304).

6. Dispositif (300) selon la revendication 5, **caractérisé en ce qu'**un instrument de contrôle (340) est utilisé pour synchroniser le mouvement de rotation du rétroréflecteur (332) avec les temps d'enregistrement d'image par la caméra numérique (336) au moyen de lignes de connexion électriques (341, 342, 343).

7. Dispositif (300) selon l'une quelconque des revendications précédentes, **caractérisé en ce que** le dispositif (300) contient une unité informatique (350) comptant une interface de sortie sous forme d'écran de visualisation (352), l'unité informatique (350) étant connectée à la caméra numérique (336).

8. Dispositif (300) selon la revendication 7, **caractérisé en ce que** l'unité informatique (350) comporte un support de mémorisation de programme (354) pour capturer et décoder un repère (318) d'un verre de lunettes (316).

9. Procédé de lecture d'informations numériques stockées sur un corps de verre ou de plastique utilisé comme verre de lunettes de puissance progressive (4), ébauche de verre de lunettes (104) pour un verre de lunettes de puissance progressive ou produit semi-fini de verre de lunettes (204) pour un verre de lunettes de puissance progressive, ledit procédé comprenant
la fourniture d'un verre de lunettes de puissance progressive présentant un repère permanent (32) et un repère permanent supplémentaire (30) agencés sur ou dans le corps de verre ou de plastique (4, 104, 204),
moyennant quoi l'un desdits repère permanents (30, 32) contient des informations sous forme de code matriciel de données qui individualisent le corps de verre ou de plastique (4),
la fourniture d'un faisceau lumineux d'éclairage (322, 323),
l'orientation dudit faisceau lumineux d'éclairage (322, 323) sur ledit corps de verre ou de plastique (316),
ledit faisceau lumineux d'éclairage (322, 323) traversant le corps de verre ou de plastique (316) et
la fourniture d'une caméra numérique (336) ayant un axe optique (321), et
la fourniture d'une unité informatique (350) qui contient un support de mémorisation de programme (354) avec un programme d'évaluation pour capturer et décoder les informations dudit repère permanent (318) contenant des informations sous forme de données qui individualisent le corps de verre ou de plastique (4),
ledit repère permanent (32) est agencé à un point de définition (18) du système de coordonnées du corps de verre ou de plastique local (20) tel que défini par la réglementation de normalisation DIN EN ISO 8980-2:2004, et
ledit repère permanent supplémentaire (30) est agencé sur ou dans le corps de verre ou de plastique (4, 104, 204) au point de définition (18) du système de coordonnées du corps de verre ou de plastique local (20) tel que défini par la réglementation de normalisation DIN EN ISO 8980-2:2004, et
ledit procédé comprenant en outre
la fourniture d'un rétroréflecteur (332), pour réfléchir ledit faisceau lumineux d'éclairage (322, 323) après son passage à travers le corps de verre ou de plastique (316)
afin qu'il traverse à nouveau ledit corps de verre ou de plastique (316) puis
soit renvoyé à ladite caméra (336), laquelle est connectée à ladite unité informatique (350) ;
ledit support de mémorisation de programme comporte un programme pour trouver l'emplacement dudit repère permanent (32) contenant lesdites informations sous forme de données qui individualisent le corps de verre ou de plastique (4) et extraire lesdites informations de celui-ci ;
ledit code matriciel de données comprenant les positions du point de référence proche (12) et du point de référence distant (14) sous forme de nuplet de nombres (x_{N}, y_{N}) pour le point de référence proche et de nuplet de nombres (x_{F}, y_{F}) pour le point de référence distant relativement audit système de coordonnées.

10. Procédé selon la revendication claim 9, **caractérisé en ce qu'**il comprend en outre les étapes de
fourniture d'un support de verre de lunettes (312) adapté pour maintenir ledit corps de verre ou de plastique et présentant une découpe (314) ;
moyennant quoi ledit axe optique (321) de ladite caméra (336) passe à travers ladite découpe (314) ; et
moyennant quoi ledit faisceau lumineux d'éclairage (322, 323) passe à travers ladite découpe (314) ;
la fourniture d'un rétroréflecteur (332), pour réfléchir ledit faisceau lumineux d'éclairage (322, 323) après qu'il a traversé le corps de verre ou de plastique (316) et ladite découpe (314)
afin qu'il traverse à nouveau ladite découpe (314) et ledit corps de verre ou de plastique (316) puis
soit renvoyé à ladite caméra (336), laquelle est connectée à ladite unité informatique (350).

11. Procédé selon la revendication 9 ou la revendication 10, **caractérisé en ce que** ledit repère permanent (32) et ledit repère permanent supplémentaire (30) sont un objet de phase.

12. Procédé selon l'une quelconque des revendications précédentes, **caractérisé en ce qu'**une lumière d'éclairage traverse le verre de lunettes (316) tandis que le rétroréflecteur (332) se déplace et la section du verre de lunettes (316) présentant le repère (318) sous forme de code matriciel de données est enregistrée par la caméra numérique (336).

13. Procédé selon la revendication 12, **caractérisé en ce que** l'image enregistrée dans le processus est lue et traitée par l'unité informatique (350) afin d'afficher les informations décodées du code matriciel de données sur l'écran de visualisation (352) .
